Europäisches Patentamt

European Patent Office

Office européen des brevets

(11) Publication number: **0 640 381 A1**

# EUROPEAN PATENT APPLICATION

(21) Application number: **94111430.8**

(22) Date of filing: **21.07.94**

(51) Int. Cl.6: **B01D  53/72**, B01D 53/94,
B01D 53/04

(30) Priority: **16.08.93 US 106512**

(43) Date of publication of application:
**01.03.95 Bulletin  95/09**

(84) Designated Contracting States:
**AT BE DE ES FR GB IT NL SE**

(71) Applicant: **Corning Incorporated**
**Houghton Park**
**Corning**
**New York 14831 (US)**

(72) Inventor: **Hertl, William, Corning Incorporated**
**Patent Department,**
**SP FR 02-12**

**Corning, NY 14831 (US)**
Inventor: **Patil, Mallanagouda Dyamanagouda,**
**Corning Inc.**
**Patent Department,**
**SP FR 02-12**
**Corning, NY 14831 (US)**
Inventor: **Lachman, Irwin Morris, Corning Inc.**
**Patent Department,**
**SP FR 02-12**
**Corning, NY 14831 (US)**

(74) Representative: **Reinhard, Skuhra, Weise**
**Postfach 44 01 51**
**D-80750 München (DE)**

(54) **Modified zeolite for trapping hydrocarbons.**

(57)  A molecular sieve structure is disclosed for adsorbing hydrocarbons emitted during engine start-up, before the catalytic converter has attained its effective operating temperature. The molecular sieve can be zeolites or ceramic substrates having a zeolite surface. The molecular sieve is modified by inserting certain metal ions into the molecular sieve structure. The molecular sieve structure is also capable of releasing or desorbing the hydrocarbons when the molecular sieve reaches a certain temperature.

Fig. 1

EP 0 640 381 A1

## Background of the Invention

The invention relates to method, device and system for trapping or removing hydrocarbons from exhaust gases before they are discharged into the atmosphere, using molecular sieve with non-framework cations, especially at start-up or cold-start of internal combustion engines.

Start-up emission control with catalyst converters has been unsatisfactory, because of fairly high catalyst, light-off temperatures.

In addition to emitted large molecular weight hydrocarbons, low molecular weight hydrocarbons (e.g. alkanes and alkenes) are difficult to control, creating a problem (olefins) especially since alkenes (olefine) tend to form ozone, a major smog-forming constituent.

Zeolites are less suitable for hydrocarbon adsorption because unlike NOx conversion, the hydrocarbons must be adsorbed at much lower temperatures at cold start than the 300° NOx reaction temperatures.

Among zeolites, it has been shown that ZSM-5 and Beta type zeolites are particularly effective in adsorbing alkenes, particularly, propylene, acetylene, propyne and butene, under certain conditions, as they have very small pore sizes. To improve their adsorption capacities, they are typically mixed with larger pore zeolites to adsorb a wider range of molecular sizes occurring in exhaust gases. Thus, a substrate may be coated with mixed powders of ZSM-5 zeolite ion-exchanged with Cu and Pd, and placed inline and upstream from a Pt/Rh catalyst, but there is a need for better and improved methods for reducing or removing unburned hydrocarbons, particularly, low molecular weight alkenes, from exhaust emissions. Accordingly, it is the objective of the present invention to provide emissions control devices, methods and systems capable of adsorbing significant amounts of a wide range of hydrocarbons, especially with a small pore molecular sieve material effectively adsorbing low molecular weight hydrocarbons such as ethylene, acetylene, propyne.

## SUMMARY OF THE INVENTION

A surprising discovery leading to the invention was that low molecular weight hydrocarbons can be efficiently adsorbed by small pore size molecular sieve materials if cations of non-noble, transition metals, rare earth oxides and alkaline earth metals are inserted into the molecular sieve structure. A major aspect of the invention is to provide a hydrocarbon trap which will "hold" the hydrocarbons until the catalyst reaches its full operating temperature, at which time, the trap desorbs the hydrocarbons.

In one aspect, the invention discloses a device and method method of trapping hydrocarbons from exhaust gases using a cation-containing molecular sieve means having at least one set of pores with maximum pore opening no greater than 5.6, preferably no greater than 7.0, Angstroms.

The invention also provides an engine exhaust system, which in addition to the molecular sieve further comprises a main catalytic converter, and conveying means for selectively conveying the exhaust gas stream to the molecular sieve and to the catalytic converter. Optionally, the system may comprise heat exchanger means for cooling the engine exhaust stream.

As used in this specification:

"high-silica zeolite" refers to those zeolites having a $SiO_2/Al_2O_3$ molar ratio which exceeds about 10 and for some applications, greater than 100; any silica/alumina ratio can be used in this invention, however, it is preferable to use high or very high silica/alumina ratio for thermal stability;

"molecular sieve" refers to crystalline substances or structures having pore sizes suitable for adsorbing molecules. The term is generally used to describe a class of materials that exhibit selective absorptions properties. To be a molecular sieve, the material must separate components of a mixture on the basis of molecular size and shape differences. Such materials include silicates, the metallosilicates, metalloaluminates, the $AlPO_4$ s, silico- and metalloaluminophosphates, zeolites and others described in R. Szostak, Molecular Sieves: Principles of Synthesis and Identification, pages 2-6 (Van Nostrand Reinhold Catalysis Series, 1989);

"zeolites" are crystalline aluminosilicates whose structures are based on a theoretically limitless three-dimensional network of AlOx and SiOy tetrahedra linked by the sharing of oxygen atoms, such as more fully disclosed in U.S. Patent 3,702,886, British Specification No. 1,334,243, and in U.S. Patents 3,709,979, and U.S. 3,832,449:

"non-framework cation" means cations located in the molecular sieve by a process of ion-exchange, gaseous diffusion, impregnation, adsorption, or other known methods; non-framework cations are in addition to, and to be distinguished from framework cations which the molecular sieves may possess;

a selected molecular sieve can be "impregnated" with a solution of a nitrate, or other soluble salt, then calcined to convert the salt to its oxide;

2

"light-off temperature" of a converter is the temperature at which a catalytic converter can convert 50% of carbon monoxide or hydrocarbons or NOx;

"monolithic substrate" is any unitary body or substrate formed from, or incorporating molecular sieve material; as used herein, a honeycomb substrate is a form of a monolithic substrate, but a monolithic substrate is not necessarily a honeycomb substrate.

"metal" is used herein to broadly include both the elemental form and any compound form of the metal.

BRIEF DESCRIPTION OF THE DRAWINGS

Figures 1 and 3 are schematic drawings of engine exhaust systems according to this invention.

Figure 2 is a chart illustrating, as a function of time, the direction of exhaust gases through the molecular sieve structure and converter of the engine exhaust system illustrated in Figure 1.

Figure 4a is a graph comparing the ethylene adsorption of Cu-exchanged Beta zeolite with the adsorption of non-Cu-exchanged Beta zeolite.

Figure 4b is a graph comparing the ethylene adsorption of Cu-exchanged ZSM-5 zeolite with the adsorption of non-Cu-exchanged ZSM-5 zeolite.

Figure 5 is a schematic drawing of an engine exhaust system according to this invention employing a heat exchanger.

DETAILED DESCRIPTION OF THE INVENTION

We have found that by exchanging, impregnating or adsorbing certain metal cations into a molecular sieve structure, the capacity of small pore molecular sieve materials to adsorb a wide range of hydrocarbons is greatly enhanced. Hydrocarbons which can be adsorbed by the molecular sieve structure of the invention include, but are not limited to, low molecular weight (i.e., light) hydrocarbons, such as alkanes and alkenes of 1 to 6 carbon atoms found in gasoline, diesel fuel, alcohols, and their products of combustion. The molecular sieve structure of the invention is particularly suited for the adsorption of low molecular weight alkenes (olefins), such as ethylene, propylene, acetylene, propyne, and other unsaturated hydrocarbons.

In the engine exhaust system of this invention, for a period of time commencing with engine start-up until a time prior to the molecular sieve attaining its desorption temperature, substantially all of the engine exhaust stream is passed through the molecular sieve. Substantial quantities of hydrocarbon emissions generated during engine start-up, which the converter would not yet be capable of treating, will be adsorbed by the molecular sieve and held until a later time when the converter has reached an effective operating temperature. As a result of the continuous flow of the hot engine exhaust stream through it, the molecular sieve would attain its desorption temperature before the converter is activated, and it is therefore necessary to divert the flow of the engine exhaust stream from passing through the molecular sieve before this occurs. If the exhaust stream were not so diverted, the hydrocarbons from this engine start-up period would be desorbed from the molecular sieve and passed through to the main converter before it is capable of effectively converting the hydrocarbons, thus negating the intended benefits of the system of the invention.

Once the converter has reached an effective operating temperature (i.e., light-off temperature), at least a portion of the exhaust stream is once again directed through the molecular sieve to raise its temperature to its desorption temperature, flush desorbed hydrocarbons from the molecular sieve and convey them to the engine, or any auxiliary regenerator, converter where they may be oxidized to non-toxic by-products. It will be appreciated that even before the converter attains light-off, it has some capability to convert hydrocarbons, and the system or method could be designed so that hydrocarbons are desorbed from the molecular sieve and conveyed to the converter even before it has attained light-off. Any such method or design would perform substantially the same function in substantially the same way, to achieve substantially the same result as the instantly claimed invention, and is deemed to be equivalent thereto. It is also known that some fraction of the adsorbed hydrocarbons generally will be decomposed during the desorption process to carbon, or will be decomposed and oxidized to carbon monoxide and/or carbon dioxide.

The molecular sieve means used in this invention function to adsorb and "hold" a substantial portion of the hydrocarbon emissions generated during start-up of the engine which, because the catalytic converter has not at this period attained its effective operating temperature. Upon engine start-up, especially at cold temperatures, the generated hydrocarbons will begin to be adsorbed. Desorption of the hydrocarbons from the molecular sieve commences when the molecular sieve is heated, and desorption is generally complete by the time the molecular sieve reaches a temperature of about 300 to 400 °C. The hydrocarbon trap of the invention can comprise one or more types of molecular sieve material.

The hydrocarbon trap or molecular sieve means of the invention are capable of adsorbing and desorbing hydrocarbon molecules. The preferred molecular sieve is comprised of any high-silica molecular sieve characterized by small pore size. By small pore size we mean, any molecular sieve having at least one set of pores with maximum micropore opening of no greater than 5.6 Angstroms, preferably having no pore sizes greater than 7.0 angstroms.

Useful molecular sieves for the invention include silicates (such as the metallosilicates and titanosilicates), metalloaluminates (such as germaniumaluminates), metallophosphates, aluminophosphates (such as silico- and metalloaluminophosphates (MeAPO), SAPO, MeAPSO), gallogerminates and combinations of these. Examples of useful metallosilicates include zeolites, gallosilicates, chromosilicates, borosilicates, ferrisilicates. Examples of zeolites which are particularly useful for the invention include, ZSM-5, Beta, gmelinite, mazzite, offretite, ZSM-12, ZSM-18, Berryllophosphate-H, boggsite, SAPO-40, SAPO-41, and combinations of these, most preferably, ZSM-5 and Beta zeolites.

It is essential that, as soon after engine start-up as possible, the catalyst attains its effective (light-off) temperature. The temperatures of the molecular sieve and the catalyst are raised by virtue of their contact with the hot exhaust gases emitted by the engine. The engine exhaust system of this invention utilizing a molecular sieve structure and a catalytic converter, is designed so that these elements are positioned to facilitate their specific functions. The actual location of the molecular sieve will depend on several factors such as the type and nature of the catalyst, as well as the geometry of the total emission control system and the design of the automobile. For example, in many automotive exhaust systems, the molecular sieve is positioned at a distance of about 12 to 102 cm (5 to 40") from the engine. To minimize the time needed to attain light-off temperature, additional means can be provided for heating the catalyst. For example, an electrically heated catalyst can be utilized in the system. Alternatively, a separate heater can be placed upstream of the catalyst for the purpose of heating up the catalyst.

It is preferred that the hydrocarbon trap or molecular sieve means contain sufficient material to adsorb that amount of hydrocarbon that is generally unconverted during start-up of the typical automotive engine system. For example, when the molecular sieve structure is a metal-exchanged zeolite, in whatever form the metal-exchanged zeolite is incorporated into the molecular sieve means, the means should contain 1-95% by weight zeolite, with the balance being other components such as binders. It will be recognized that because of differences in size and efficiency of various engines, the amount hydrocarbon adsorbed may vary from as low as 1.0 grams in some situations to as much as 3.0-5.0 grams or higher for other engine systems. Generally, it is preferred that the molecular sieve means be capable of adsorbing at least about 1.0-3.0 grams of hydrocarbon. The sieves useful in this invention generally can adsorb about 0.03 grams of hydrocarbon per gram of sieve. Accordingly, in the typical engine system, for example, there should be at least about 200 grams of sieve in the molecular sieve means.

For ease of discussion, in the following description of the invention, the molecular sieve means is described in terms of zeolites in general or ZSM-5 in particular. Although zeolite is a preferred molecular sieve material, reference to zeolites herein is not intended to limit the scope of the invention. As discussed above, any molecular sieve having small pore size, that is, at least one set of pores with maximum pore openings no greater than 5.6 Angstroms, preferably having no set of pores with pore openings greater than 7.0 Angstroms can be used in the exhaust gas system of the invention. Also, it is to be understood that in addition to ion-exchange, other methods can be employed to insert non-framework cations into the molecular sieve structure such as, gaseous diffusion, adsorption, impregnation and other known methods.

We have found that by using certain metal-exchanged small pore size zeolites, such as ZSM-5 zeolites, the range of hydrocarbons adsorbed by such zeolites can be increased. It is well known that small pore zeolites such as ZSM-5 and Beta zeolites are particularly efficient in adsorbing propylene. It also well known that while these zeolites adsorb small amounts of ethylene, the efficiency for ethylene adsorption is very poor. We have discovered that ethylene can be efficiently adsorbed by these zeolites if cations of non-noble, transition metals, rare earth oxides and alkaline earth metals, are inserted into the zeolite by a process of ion-exchange, adsorption or impregnation. The maximum amount of such non-framework cations that can be inserted into the molecular sieve can vary depending on the atomic weight of the cation specie, and in the case of ion-exchange into zeolite adsorber, the silica/alumina molar ratio. The maximum amount of non-framework cations inserted in the molecular sieve or zeolite adsorbers of the invention are preferably in the range of 1 to 15 weight %, more preferably 1-5 weight percent. However, the weight percent varies considerably due to the large variation in the atomic weight from low to high atomic numbers.

The ethylene adsorption capacity and initial pick-up of small pore zeolites exchanged with copper and iron are given in Table 1 below. Adsorption was carried out in the presence of synthetic exhaust gas mixture characterized by: 500 ppm of the indicated hydrocarbons; 1000 ppm NOx; 1% CO; 0.33% $H_2$;

0.77% $O_2$; 14% $CO_2$; balance $N_2$, and at a space velocity (SV) of 50,000 changes/hr. For reference, the hydrocarbon adsorption capacity and initial pick-up of the cation-exchanged zeolites was compared with the adsorption of corresponding non-ion-exchanged zeolites. To ensure that the process of ion-exchange does not adversely affect the capacity of the zeolites to adsorb large molecules, the adsorption of propylene and isopentane were also measured. As shown in Table 1, copper-exchanged zeolites were effective in adsorbing ethylene with little or no adverse effect on the adsorption capacity of the zeolite for isopentene. Iron, on the other hand was not effective in adsorbing ethylene.

## TABLE 1

| Zeolite Capacity ($SiO_2$: $Al_2O_3$) Capacity (mg) | Cation Loading on Zeolite | HC | Cation Exchanged Zeolite Initial Ro(%)** | Capacity (mg)* | Reference Ref. Zeolite Initial Ro(%)** | |
|---|---|---|---|---|---|---|
| ZSM-5 (30:1) | Cu (3.2%) | $C_2H_4$ | 100 | 21.6 | 36 | 13 |
| | | $C_3H_6$ | 92 | 72.79 | 86 | 94 |
| | | $C_5H_{12}$ | -- | -- | | |
| ZSM-5 (150:1) | Fe (2.04%) | $C_2H_4$ | 16 | 7.1 | 36 | 13 |
| | | $C_3H_6$ | 35 | 9.6 | 69 | 38 |
| | | $C_5H_{12}$ | -- | -- | | |
| Beta (25:1) | Fe (4.22%) | $C_2H_4$ | 28 | 8 | 18 | 10 |
| | | $C_3H_6$ | 78 | 49.8 | 92 | 86 |
| | | $C_5H_{12}$ | -- | -- | -- | -- |
| Beta (40:1) | Cu (13.6%) | $C_2H_4$ | 85 | 17.28 | 18 | 10 |
| | | $C_3H_6$ | 79 | 61 | 92 | 67 |
| | | $C_5H_{12}$ | 79 | 134 | 92 | 101 |

*   Capacity is the amount of propylene adsorbed after approximately 30 minutes, using standard sample size containing about 1.8 grams of zeolite.

**  Initial pick-up rate is the % hydrocarbon adsorbed from the cumulative hydrocarbon feed during the first three minutes; this is a measure of adsorption efficiency.

Beta and ZSM-5 zeolites of various silica-to-alumina weight ratios have been shown to adsorb appreciable amounts of propylene because of their relatively small pore sizes and the presence of acid sites. As the above table shows, they also show very poor adsorption for ethylene. Beta zeolites exhibit two sets of pores having maximum pore sizes of 7.6 x 6.4, and 5.5 x 5.5 Angstroms, respectively. ZSM-5 zeolites also exhibit two sets of pores having maximum pore openings of 5.3 x 5.6, and 5.1 x 5.5 Angstroms, respectively. Without intending to be bound by theory, it is believed that the cations create sites or modify existing sites making the zeolites capable of adsorbing smaller molecules.

As contemplated by this invention, during cold start, all or part of the exhaust gas is passed over a hydrocarbon trap or molecular sieve means (structure), capable of adsorbing the low molecular weight alkenes. The trapped hydrocarbons remain in the adsorbing structure until the temperature of the catalyst is high enough to convert the hydrocarbons, at which time, the trapped hydrocarbons are desorbed from the trap. In particular, the exhaust gas system of the invention includes one or more means for selectively directing the engine exhaust stream as follows: (1) for the period of time prior to the adsorbing structure attaining its desorption temperature, directing substantially all of the exhaust stream through the adsorbing structure and the catalytic converter; (2) for the period of time thereafter, directing substantially all of the exhaust stream through the catalytic converter, bypassing the adsorbing structure; and (3) for the period of time thereafter, after the catalytic converter attains at least its light-off temperature, directing at least a portion of the exhaust stream through the adsorbing structure, and thereafter through the catalytic converter. In stage (3), the directed portion of exhaust stream should be an amount sufficient to raise the temperature of the adsorbing structure to its desorption temperature and thereby effect desorption of hydrocarbons therefrom. In the preferred embodiment, the adsorbing structure or molecular sieve means includes a zeolite structure with non-framework cations.

During cold start, the zeolite not only traps hydrocarbons but also causes cracking of some hydrocarbons. In refinery applications, this is commonly described as "coking." As is well known in the art, the addition of noble metal oxidation catalysts such as palladium, is usually added to the zeolite to insure oxidation of the carbonaceous materials which result from coking. Oxidation occurs after desorption and completes the regeneration of the trap. In automotive applications, burn-off or regeneration is facilitated by high temperature exhaust gas. The amount of noble metal catalyst needed for regeneration is in the range of 1-10 $g/ft^3$ and preferably, 2-4 $g/ft^3$. For most automotive emissions control catalytic applications, the amount of noble metals needed is significantly higher, generally in the range of 30 to 60 $g/ft^3$.

The catalysts useful in the catalytic converter of the engine system and in the method of this invention are those which are at least capable of converting hydrocarbons to water and carbon dioxide and are well known in the art. For example, noble metal catalysts, such as mixtures of platinum and palladium, are widely used in automotive catalytic converters. These catalysts are capable not only of oxidizing hydrocarbons but also of converting carbon monoxide in the engine exhaust stream to carbon dioxide. In many cases, three-way converters which additionally convert NOx to non-toxic by-products, are used. Typically, a three-way converter would comprise both a noble metal catalyst such as platinum and/or palladium, and rhodium, for example, platinum/palladium/rhodium on gamma alumina with rare earth oxides (e.g., ceria), platinum on ceria-alumina combined with rhodium on zirconia. The different catalysts can be combined and applied in one step, or they can be applied in separate coatings. The catalytic converters mentioned herein generally comprise catalysts such as those discussed above and a ceramic support, such as a ceramic honeycomb structure. The catalyst may, for example, be provided on the surface of the support or may be embedded or dispersed within the ceramic support by methods known in the art and discussed above in connection with the zeolite molecular sieve means.

The experiments resulting in the data shown in Table 1 were carried out using washcoated zeolites on cordierite honeycomb supports having cell density of 400 cells per square inch (cpsi), and wall thickness of 0.0065". The washcoat slurries were prepared by mixing the indicated zeolites, which have already been ion-exchanged with the indicated cations, with an alumina colloidal suspension, Nyacol Al-10 (manufactured by PQ Corporation). After heat treatment, the weight ratio of zeolite to alumina binder for each zeolite was 85:15. The slurry coated honeycomb supports were then dried at about 100 °C, and heated treated in the range of 500-600 °C. The amount of washcoat on each sample after heat treatment was in the range of 35-40 weight percent.

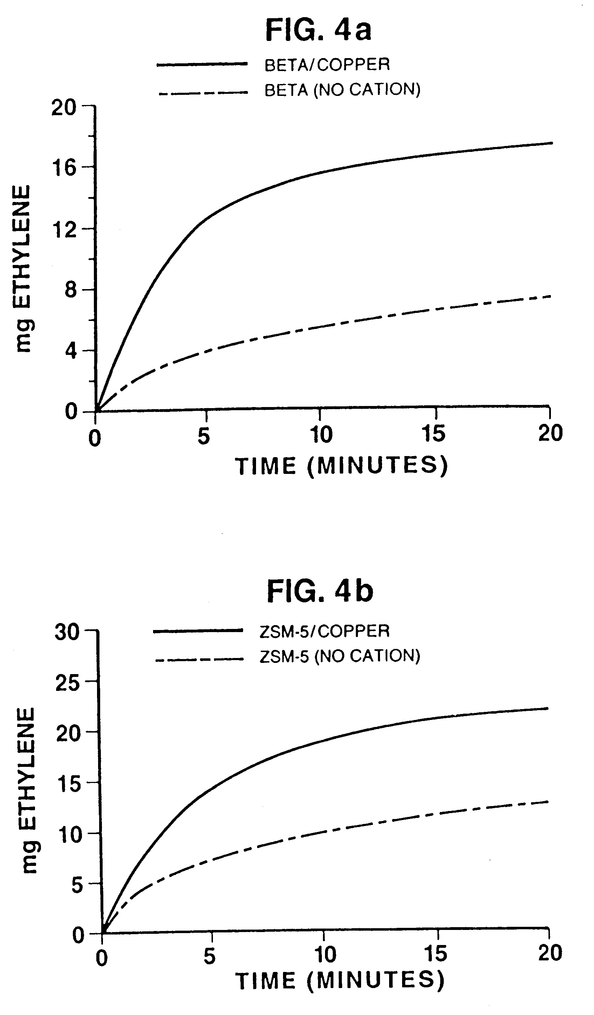

The adsorption of ethylene was then measured in a bench reactor in the presence of synthetic exhaust gas. Figures 4a and 4b compare the ethylene adsorption of Cu-exchanged beta and ZSM-5 zeolite with the adsorption of non-Cu-exchanged zeolites. As more clearly illustrated by Figures 4a and 4b, the adsorption of ethylene is enhanced by inserting metal cations into the molecular sieve materials.

It is believed that in situ grown zeolites, ion-exchanged with metal cations will be equally effective in adsorbing low molecular weight hydrocarbons. In addition to ion-exchange, the metal can be formed on the zeolite by adsorption or by impregnation.

The hydrocarbon trap or molecular sieve means of the invention, may be utilized in any number of forms. For example, the metal cation-exchanged molecular sieve or zeolite powders may be utilized directly in pellet form, or it may be embedded in, or coated on porous ceramic pellet beads. Alternatively, the molecular sieve or zeolite can be ion-exchanged, adsorbed, or impregnated with non-framework cations after the molecular sieve or zeolite has been formed in pellet form, or embedded in, or coated on porous ceramic pellets or beads. Such pelletized molecular sieve or zeolite, however, provides high resistance to flow, so it is preferred to provide the molecular sieve or zeolite in the form of or in combination with a monolithic substrate, for example, by (1) forming (e.g., by extrusion) the zeolite into a porous monolithic structure such as a honeycomb, (2) embedding or coating zeolite on a metal, metal alloy, ceramic, or glass ceramic substrate, such as extruded honeycomb substrates, or (3) by crystallizing zeolite on the surface of a metal, metal alloy, ceramic, or glass ceramic substrate (i.e., the zeolite is formed in situ). In embodiments (1) and (2) above, the non-framework cations can be inserted in the molecular sieve or zeolite before or after forming the substrate or monolithic structure. In embodiment (3), the non-framework cations are inserted in the molecular sieve or zeolite after the zeolite or molecular sieve has been formed in situ.

The substrate can be any material suitable for high temperature application such as certain metals, metal alloys, ceramics, glass-ceramics, glass, high surface area-high temperature stable oxides, and combinations of these materials. Examples of useful substrate materials include, cordierite, mullite, clay, talc, zircon, zirconia, spinel, alumina, silica, borides, lithium aluminosilicates, alumina silica, feldspar, titania, fused silica, nitrides, carbides and mixtures of these. Useful metals for the substrate include, substrates formed of iron group metals such as Fe-Al, Fe-Cr-Al alloys, stainless steel, and Fe-Nickel alloys.

The substrate can be of any size and shape depending on the particular application. For example, it can be in the form of beads, pellets, or monoliths such as a honeycomb structure. In addition, the substrate can have any degree of wall porosity. In a preferred embodiment, the substrate exhibits moderate to high wall porosity, that is, about 30-70% by volume, more preferably, 30-50% by volume.

The molecular sieve material can be applied to substrate by any known method such as for example, by conventional washcoat or spraying techniques. In the washcoat technique, the substrate is contacted with a slurry containing the molecular sieve and other components such as temporary binders, permanent binders or precursors, dispersants and other additives as needed. Such methods are well known in the art. The permanent binder in the slurry includes for example, aluminum oxide and its precursors, silica, titania, zirconia, rare earth oxides, and their precursors, spinel and precursors. The molecular sieve slurry is then applied (for example, by repeated spraying or dipping) to the substrate until the desired amount of molecular sieve material has been applied.

One useful method for forming zeolite on the surface of a substrate is disclosed in U.S. 3,730,910, herein incorporated by reference. According to this method, a substrate, consisting of an inorganic oxidic component selected from silicon oxides, aluminum oxides and mixtures thereof, is contacted with a solution selected from silicate solutions or aluminate solutions including a zeolite seed slurry, the solution component being in a concentration ratio to said substrate inorganic oxidic component to form a zeolite. The resulting mixture is then heated to yield a zeolite surfaced substrate.

U.S. 4, 381,255, herein incorporated by reference, discloses a process for producing binderless zeolite extrudates by extruding a mixture containing equal amounts of a zeolite powder, a metakaolin clay and a near stoichiometric caustic solution, in which the clay in the extrudate crystallizes to form a coherent particle that is essentially all zeolite.

U.S. Patent 4,631,267, herein incorporated by reference, discloses a method for producing a monolithic support structure for zeolite by (a) mixing into a substantially homogeneous body (i) a zeolite, (ii) a precursor of a permanent binder for the zeolite selected from the group consisting of alumina precursors, silica precursors, titania precursors, zirconia precursors and mixtures of these, the binder precursor having a crystallite size below 200 angstroms, and (iii) a temporary binder; and (b) heating the body to a temperature of from 500 to 1000°C. The mixed body of step (a) may preferably be formed into the shape of a honeycomb. Preferably, the permanent binder precursor is a silicone resin, a suspension of a hydrated alumina, aluminum chlorohydrate or a suspension of hydrolyzed aluminum isopropoxide, and the temporary binder is methyl cellulose. Other useful temporary binders include cellulose ether binders such as methylcellulose, ethylcellulose, hydroxybutylcellulose, hydroxybutylmethylcellulose, hydroxyethylcellulose, hydroxymethylcellulose, hydroxypropylcellulose, hydroxypropylmethylcellulose, hydroxyethylmethylcellulose, and mixtures of these binders.

A method for preparing a honeycomb of zeolite embedded in a ceramic matrix is disclosed in U.S. 4,657,880, herein incorporated by reference. According to this method, a monolithic support for the zeolite is prepared which has a first substantially continuous sintered phase of ceramic material of high strength, and a second discontinuous phase of the zeolite embedded within the ceramic phase. The zeolite phase is first prepared by mixing a zeolite with a binder, heating the mixture to a temperature up to 250°C to dry or cure it, and forming the dried or cured mass into coarse particles having a median diameter of 50 to 250 microns. The monolithic support is prepared by mixing 15-50 parts by weight of the particles with 50-85 parts by weight of a ceramic support material, shaping this mixture into any desired shape such as a honeycomb structure, and heating the shaped mixture to a temperature and for a time sufficient to sinter the ceramic. Preferred binders for this method include silicone resin, polymerized furfuryl alcohol, acrylic resin, methyl cellulose, and polyvinyl alcohol. Preferred ceramic materials include cordierite, mullite, clay, talc, titania, zirconia, zirconia-spinel, alumina, silica, lithium aluminosilicates, and alumina-zirconia composites.

U.S. 4,637,995, herein incorporated by reference, discloses a method for preparing a monolithic zeolite support comprising a ceramic matrix having zeolite dispersed therein. According to this method, a substantially homogeneous body comprising an admixture of (i) a ceramic matrix material, in particulate form finer than 200 mesh, selected from cordierite, mullite, alpha-alumina, lithium aluminosilicate, and mixtures of these, and (ii) a zeolite having a crystallite size no larger than 0.2 microns and a surface area of at least 40 m2/g is prepared. The mixed body is formed into a desired shape, such as a honeycomb, and heated to sinter the ceramic matrix material.

A method for crystallizing strong-bound zeolites on the surfaces of monolithic ceramic substrates is disclosed in U.S. 4,800,187, herein incorporated by reference. According to this method, the ceramic substrate, such as a honeycomb, is treated, in the presence of active silica, with a caustic bath to crystallize the silica to a zeolite form. In one embodiment of the disclosed invention, a monolithic ceramic substrate having an oxide composition consisting essentially of 45-75% by weight silica, 8-45% by weight alumina, and 7-20% by weight magnesia is hydrothermally treated with an aqueous solution comprising sodium oxide or hydroxide, alumina and optionally active silica at a temperature and for a time sufficient to crystallize a desired zeolite on the surfaces of the substrate. In a second embodiment, a monolithic ceramic substrate is coated with a layer of active silica, the coating being 1-45% of the weight of the coated substrate, and then hydrothermally treated with an aqueous solution comprising sodium oxide or hydroxide and alumina to crystallize the active silica to the desired zeolite and provide the zeolite on the surfaces of the substrate.

In another embodiment, a sintered monolithic body, which comprises a porous ceramic material and 1-40% by weight, based on the total body weight, of active silica embedded within the ceramic material, is hydrothermally treated with an aqueous solution comprising sodium oxide or hydroxide and optionally alumina to crystallize a desired zeolite on the surface of the body.

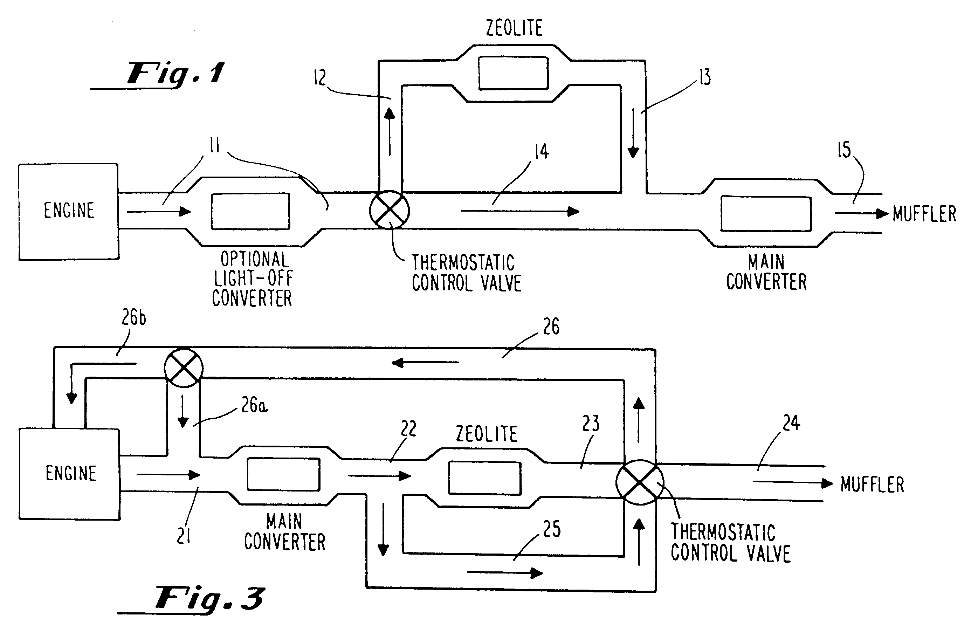

The catalysts typically utilized in automotive catalytic converters generally have light-off temperatures in the range of about 300 to 400°C. Hydrocarbons begin to desorb from the zeolite at a temperature below the light-off temperature of the catalyst. Therefore, a special engine exhaust system design should be utilized which enables the zeolite to "hold" the adsorbed hydrocarbons until the catalyst has reached its light-off temperature and then "release" the hydrocarbons to the catalyst for conversion. One example of such system design is the "bypass" system some of which are illustrated in Figs. 1 and 3. In addition to the bypass design, an "in-line" design can also be used in which the adsorber is placed in series with the catalyst.

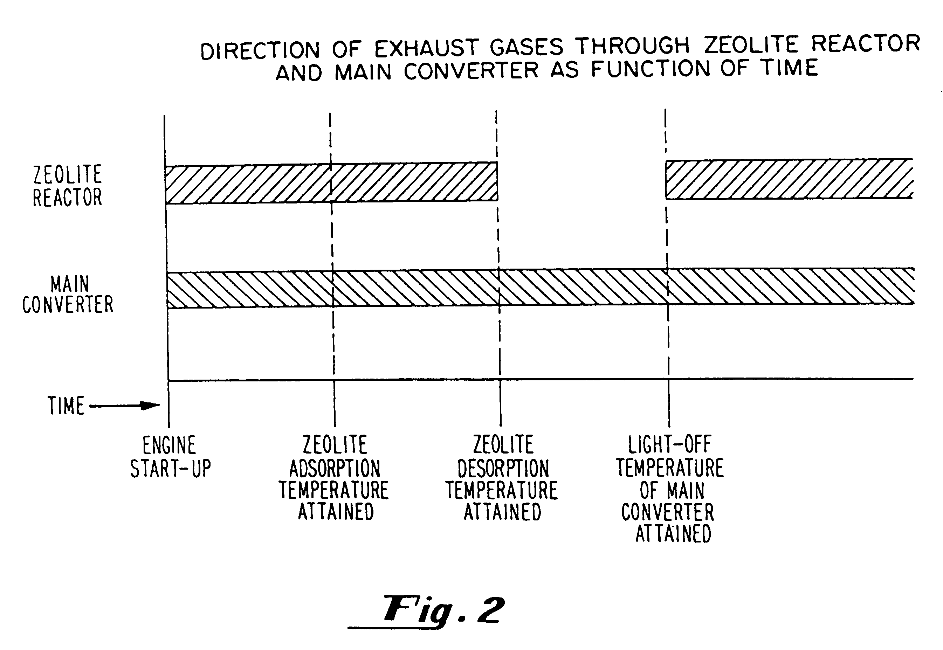

One embodiment of an engine exhaust system in accordance with this invention is schematically illustrated in Figure 1. The direction of exhaust gases through the zeolite reactor in the system of Figure 1 is shown as a function of time in Figure 2. In the embodiment of Figure 1, an optional light-off converter is positioned closely adjacent to the engine, preferably close enough so that the catalyst can reach activation temperature shortly after engine start-up. During start-up of the engine, exhaust gases are passed from the engine, generally through an exhaust manifold (not shown), and then through line 11 to the optional light-off converter. The exhaust stream is then directed through the thermostatic control valve and through line 12, bypassing line 14 during this start-up period, to the zeolite where hydrocarbons in the exhaust stream are adsorbed. (As used herein, "line" or "lines" refer to the usual exhaust system piping.) Exhaust stream passing through the zeolite, having had hydrocarbon removed therefrom, is then passed through line 13 to the main converter and then through line 15 to the muffler and external atmosphere. Passage of the stream through the main converter begins the process of raising its internal temperature towards its light-off temperature. The hot exhaust gases passing through the zeolite cause its temperature to be raised also, and the thermostatic control valve is programmed so that, prior to the zeolite's attaining its desorption temperature, exhaust gases bypass line 12 and therefore the zeolite and instead pass from the line 11 through the valve and directly to the main converter through line 14. Once the main converter has attained its light-off temperature, as a result of the continued passage of hot gases therethrough, the thermostatic valve operates to direct at least a portion of the exhaust gases through the zeolite in order to raise it to its desorption temperature. This, in turn, causes the release of the hydrocarbons, which then pass with the exhaust gases to the main converter. There, the hydrocarbons that had been held by the zeolite, as well as the hydrocarbon components of the exhaust gases being conveyed directly through line 14, are converted to carbon dioxide and water. The thermostatic control valve can be programmed so that after substantially all hydrocarbons are desorbed from the zeolite, the exhaust gases are diverted in whole or in part from the zeolite; any exhaust gases that so by-pass the zeolite are conveyed only through the converter means and then discharged from the system to the atmosphere.

A second embodiment of the engine exhaust system of this invention is illustrated in Figure 3. In this embodiment, exhaust gases pass from the engine through line 21 to the main converter and out to line 22. During engine start-up, the thermostatic control valve is adjusted so that exhaust gases pass from line 22 through the zeolite and line 23 and then through line 24 to the muffler and external atmosphere. Until the main converter attains effective operating temperature, hydrocarbons in the exhaust gas will simply pass through the converter to the zeolite where they will be adsorbed. As the zeolite approaches its desorption temperature, the valve is operated so that the exhaust gases discharged from the main converter are directed through line 25, bypassing the zeolite, and then through line 24 to the muffler and discharge. The thermostatic control valve is programmed so that after light-off of the main converter is attained, at least a portion of the exhaust gases pass from the main converter through the zeolite, with the remaining portion being directed through line 25 and line 24 to the muffler and discharge. The portion of hot gases that is now directed to pass through the zeolite heats the zeolite to its desorption temperature and flushes out the previously adsorbed hydrocarbons. The gases thus discharged from the zeolite are directed through the valve to line 26 and recycled either to the engine (through line 26b) for further combustion or to the main converter (through line 26a) where the hydrocarbons that had initially been held by the zeolite are converted.

As shown in Figure 3, the two options for the recycle operation are effected with use of an additional three-way valve in line 26 to convey the recycle stream directly to the engine, through line 26b, or to the intake of the main converter, through line 26a. It will be recognized, however, that exhaust systems of the present invention can be constructed so that the recycle stream is always directed to one or the other, thereby eliminating the need for the valve and one of the branch recycle lines. In either event, if the recycled stream is to be conveyed directly to the main converter, a venturi, pump, or other pressure-raising means will generally be required at some point in line 26 or 26a to generate sufficient pressure. For recycle directly to the engine, no pressure-raising means would be necessary since the engine intake operates at vacuum. After the hydrocarbons are desorbed from the zeolite, the valve in line 23 can be set so that exhaust gases from the main converter by-pass the zeolite, in whole or in part, through line 25 and are discharged from the system through line 24.

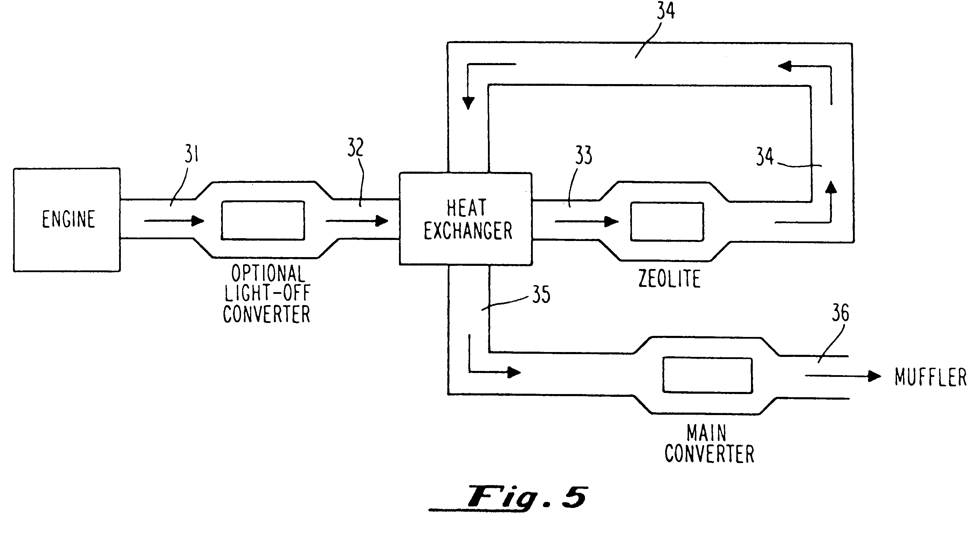

A further embodiment of the engine exhaust system of the invention is illustrated in Figure 5. According to this embodiment, a heat exchanger is positioned in the exhaust stream to cool the hot engine exhaust prior to its passage through the zeolite, thereby delaying the time at which the zeolite will reach its desorption temperature, and thereafter to re-heat that same stream prior to its conveyance to the main converter so that the catalyst therein is heated at a rate sufficient to quickly raise it to its light-off temperature.

With particular reference to Figure 5, an optional light-off converter is positioned closely adjacent to the engine. During start-up of the engine, hot exhaust gases are passed from the engine, generally through an exhaust manifold (not shown), and then through line 31 to the optional light-off converter. The exhaust stream is discharged from the light-off converter through line 32 and passes through a heat-exchanger in which it is cooled, as more fully described below, by transfer of heat to incoming line 34. The cooled engine exhaust is discharged from the heat exchanger through line 33 to the zeolite, where hydrocarbons in the exhaust stream are adsorbed. The exhaust stream exits the zeolite via line 34, which will be cooled still further by heat-loss to the environment, and is then directed to the heat exchanger, which it now enters as the "cold side" fluid to absorb heat from hot engine exhaust line 32. The exhaust stream that entered the heat exchanger as line 34 is discharged at a higher temperature through line 35, which directs it to the main converter. Passage of this re-heated stream through the main converter begins the process of raising the converter's internal temperature towards its light-off temperature. From the main converter, the stream is carried through line 36 to the muffler for ultimate discharge from the system to the atmosphere.

The heat exchanger of this embodiment operates most effectively during the initial start-up period of the engine, when the zeolite itself and lines 33 and 34 are initially cool. The heat exchanger is preferably of the counter-current kind in which lines 34 and 32 enter at opposite ends of the exchanger and pass in opposite directions through the unit (Fig. 5). With such a design, the initially hot gas stream of line 32 is cooled prior to passage through the zeolite, thereby slowing the rate at which the zeolite is heated and delaying the time at which the zeolite's adsorption capability is ended and desorption commences. Particularly with use of an efficient counter-current heat exchanger, desorption can be delayed until the main converter has reached its light-off temperature. It will be appreciated that as the engine continues to run, the temperature difference between line 32 and line 34 will steadily shrink, resulting in a steady increase in the temperature of the exhaust in line 33, which will accelerate the rate at which the zeolite approaches to its desorption temperature. However, by the time the desorption temperature is reached, the main converter will have attained its light-off temperature. Hydrocarbons desorbed from the zeolite will be carried by the engine exhaust stream through lines 34 and 35 to the main converter, where they will be catalyzed to less noxious gases prior to discharge to the atmosphere through line 36.

In addition to the counter-current flow design discussed above, the heat exchanger can be of the cross-flow type, e.g. constructed of a honeycomb structure as shown in U.S. Patent 3,940,301. However, with suitable and conventional alteration of exhaust piping and connections, the heat exchanger can also be of the rotary type, e.g. constructed of a honeycomb structure as shown in U.S Patent 4,306,611, or of the stationary, parallel flow type, e.g. constructed of a honeycomb structure as shown in U.S. Patents 4,041,591 and 4,041,592. If desired, the heat exchanger can contain a catalyst for conversion, e.g. as shown in U.S. Patent 4,089,088.

Examples

The hydrocarbon containing gas stream used in the following examples was a synthetic exhaust gas having the following composition in volume percent: $NO_x$ = 1000 ppm, CO = 1%, indicated hydrocarbon = 500 ppm; $H_2$ = 0.33%; $O_2$ = 0.77%; $CO_2$ = 14%; balance $N_2$, and at a space velocity (SV) of 50,000 volume changes/hr.

A honeycomb substrate having the molecular sieve or zeolite of the invention was placed in a reaction chamber in a furnace, and exposed to the synthetic exhaust gas over the temperature range ambient to 600 °C, and heat treated at 600 °C in air and cooled in nitrogen. This activates the hydrocarbon adsorbing agent and removes water. The experiment was repeated using the above synthetic exhaust gas mixture as well as with other hydrocarbons. The concentration of hydrocarbon in the exhaust gas entering and leaving the reaction chamber is monitored to obtain the amount of hydrocarbon adsorbed. The results are plotted in FIGS. 4a and 4b which show the quantity of ethylene adsorbed with time for the molecular sieve having non-framework cations, compared to the reference molecular sieve. As shown in FIG. 4a, after 20 minutes, the reference Beta zeolite adsorbed only about 7 mg of etylene compared to adsorptions of over 17 mg for the Cu-exchanged beta zeolite. Similarly, after 20 minutes reference ZSM-5 (silica/alumina = 26:1) adsorbed about 10 mg of ethylene while the Cu-exchanged ZSM-5 adsorbed more than 20 mg of ethylene. The results are shown in Table 1.

**Claims**

1. An exhaust emission control device for converting hydrocarbons in a hydrocarbon-containing engine exhaust stream to water and carbon dioxide comprising a housing adapted to receive a molecular sieve structure, the molecular sieve structure comprising non-framework cations selected from ions of non-noble, transition metals, rare earth oxides, alkaline earth metals and combinations of these, the molecular sieve being further characterized by at least one set of pores having maximum pore openings no greater than 5.6 Angstroms.

2. The device of claim 1, wherein the molecular sieve structure comprises zeolites, metallosilicates, titanosilicates, metalloaluminates, germaniumaluminates, metallophosphates, aluminophosphates, silicoaluminophosphates, metalloaluminophosphates, gallogerminates, gallosilicates, chromosilicates, borosilicates, ferrisilicates and combinations of these.

3. The device of claim 1, or 2 wherein the molecular sieve is a zeolite selected from ZSM-5, Beta, gmelinite, mazzite, offretite, ZSM-12, ZSM-18, Berryllophosphate-H, boggsite, SAPO-40, SAPO-41, or combinations of these.

4. The device of claims 1, 2, or 3, wherein the base metal transition metal is copper.

5. The device of claim 1, 2, 3 or 4 wherein the molecular sieve is supported on a substrate, especially in form of beads, pellets, monoliths, or honeycombs, metals, metal alloys, ceramics, glass-ceramics, glass, temperature stable oxides, or combinations thereof, or a ceramic structure selected from cordierite, mullite, clay, talc, ziron, zirconia, spinel, alumina, silica, borides, lithium aluminosilicates, alumina, silica, feldspar, titania, fused silica, nitrides, carbides and mixtures of these or a metal structure comprising iron group metals selected from Fe-Al, Fe-Cr-Al alloys, stainless steel, Fe-Ni alloys and combinations of these.

6. The device of any one of claims 1-5, wherein the substrate is characterized by wall porosity in the range of 30-70% by volume, and/or no set of pores of the molecular sieve have maximum pore openings greater than 7.0 Angstroms.

**7.** The device of any one of the preceding claims, wherein the cations are formed to the sieve structure by impregnation, gaseous diffusion, adsorption, or ion exchange.

**8.** The device of any one of the preceding claims, wherein the substrate is a honeycomb structure.

**9.** Use of the device according to any one of the preceding claims, in an engine exhaust system for converting hydrocarbons in a hydrocarbon-containing engine exhaust stream to water and carbon dioxide, wherein the

molecular sieve means adsorb hydrocarbons from the engine exhaust stream and desorbe hydrocarbons therefrom upon heating to a desorption temperature;

main catalytic converter means for converting hydrocarbons in the stream to water and carbon dioxide, the main catalytic converter means having a light-off temperature; and

one or more conveying means for selectively conveying the engine exhaust stream to the catalytic converter and to the molecular sieve means, optionally comprising a thermostatically controlled valve.

**10.** The exhaust system of claim 9, wherein the conveying means operate to

(i) convey, for a first period of time prior to the molecular sieve means attaining its desorption temperature, substantially all of the exhaust stream through the molecular sieve means and the converter means;

(ii) convey, for a second period of time thereafter, substantially all of the exhaust stream through the catalytic converter means, bypassing the molecular sieve means; and

(iii) convey, for a third period of time thereafter, after the catalytic converter means attains at least its light-off temperature, at least a portion of the exhaust stream through the molecular sieve means and thereafter through the main catalytic converter, the conveyed portion of exhaust stream being sufficient to raise the temperature of the molecular sieve means to its desorption temperature and thereby effect desorption of hydrocarbons therefrom.

**11.** The exhaust system of claim 10, wherein the conveying means operate, for the third period of time, to convey through the molecular sieve means a portion of the exhaust stream sufficient to effect desorption of substantially all hydrocarbons from the molecular sieve means and to convey the desorbed hydrocarbons to the main catalytic converter means.

**12.** The exhaust system of claim 11, wherein, for a fourth period of time subsequent to the desorption of substantially all hydrocarbons from the molecular sieve, the one or more conveying means operate to convey substantially all of the exhaust to the converter means, bypassing the molecular sieve means.

**13.** The exhaust system of claim 9, 10, 11 or 12 wherein the main catalytic converter is an electrically heated catalyst, and/or a heater is positioned in the exhaust system upstream from the main catalytic converter.

**14.** The exhaust system according to claim 13, further comprising heat exchanger means for cooling the engine exhaust stream prior to its passage through the molecular sieve means and for re-heating the stream prior to its passage through the converter means.

**15.** The engine exhaust system of claim 14, wherein the heat exchanger means is a counter-current heat exchanger having a cold fluid inlet and a hot fluid inlet.

**16.** The engine exhaust system of claim 15, wherein the hot fluid is the engine exhaust stream prior to its passage through the molecular sieve means and wherein the cold fluid is the engine exhaust stream after passage through the molecular sieve means but before passage through the converter means.

**17.** A method of controlling hydrocarbon emissions with the system according to any one of claims 9-16, characterized by

selectively directing the exhaust stream so as to

(i) direct, for a first period of time prior to the molecular sieve means attaining its desorption temperature, substantially all of the exhaust stream through the molecular sieve means and the converter means;

(ii) direct, for a second period of time thereafter, substantially all of the exhaust stream through the catalytic converter means, bypassing the molecular sieve means; and

(iii) direct, for a third period of time thereafter, after the catalytic converter means attains at least its light-off temperature, at least a portion of the exhaust stream through the molecular sieve means and thereafter through the main catalytic converter means, the directed portion of exhaust stream being sufficient to raise the temperature of the molecular sieve means to its desorption temperature and thereby effect desorption of hydrocarbons therefrom.

18. The method of claim 17, wherein the molecular sieve is formed by

mixing the zeolites with a precursor of a permanent binder, and a temporary binder;

shaping the mixture into a honeycomb structure; and

heating the shaped mixture to a temperature and for a time sufficient to develop a strong permanent binder, optionally to a temperature in the range of 500 to 1000°C.

19. The method of claim 18, wherein the precursor of a permanent binder is selected precursors of alumina, silica, titania, zirconia or mixtures thereof, and/or comprises silicone resin, hydrated alumina, aluminum chlorohydrate, and hydrolyzed aluminum isopropoxide.

20. The method of claim 18, wherein the temporary binder is selected from the group consisting of methylcellulose, ethylcellulose, hydroxybutylcellulose, hydroxybutylmethylcellulose, hydroxyethylcellulose, hydroxymethylcellulose, hydroxypropylcellulose, hydroxypropylmethylcellulose, hydroxyethylmethylcellulose, and mixtures of these.

21. The method according to any one of claims 17-20 wherein the molecular sieve material comprises a substrate having formed thereon a washcoat slurry comprising zeolites and binders.

22. Use of the device according to any one of claims 1-8 in a method of removing hydrocarbons from exhaust gas stream by contacting the gas stream with an adsorber at a temperature below 200°C, adsorbing hydrocarbons from the stream and desorbing hydrocarbons therefrom upon heating to a desorption temperature.

**Fig. 1**

ENGINE → OPTIONAL LIGHT-OFF CONVERTER (11) → (12) → ZEOLITE → (13) → (14) → THERMOSTATIC CONTROL VALVE → MAIN CONVERTER → (15) → MUFFLER

**Fig. 3**

ENGINE → MAIN CONVERTER (21) → (22) ZEOLITE → (23) → THERMOSTATIC CONTROL VALVE → (24) → MUFFLER; (25); (26); (26a); (26b)

13

DIRECTION OF EXHAUST GASES THROUGH ZEOLITE REACTOR
AND MAIN CONVERTER AS FUNCTION OF TIME

*Fig. 2*

EP 0 640 381 A1

# FIG. 4a

BETA/COPPER
BETA (NO CATION)

# FIG. 4b

ZSM-5/COPPER
ZSM-5 (NO CATION)

_Fig. 5_

EP 0 640 381 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| P,X | EP-A-0 602 963 (NGK INSULATORS LTD.) 22 June 1993<br><br>* page 4, line 18 - page 5, line 33; example 1 * | 1-3,5, 7-9,18, 19,21,22 | B01D53/72 B01D53/94 B01D53/04 |
| P,Y | EP-A-0 593 904 (CORNING INC.) 27 April 1994<br>* page 3, line 26 - page 5, line 45; claims 1,2,6-10; figure 1 * | 1-9, 18-22 | |
| P,Y | EP-A-0 593 898 (CORNING INC.) 27 April 1994<br>* column 3, line 19 - column 8, line 53; claims 1-10; figures 1-3 * | 1-3,5-9, 18-22 | |
| Y | DATABASE WPI<br>Section Ch, Week 9248,<br>Derwent Publications Ltd., London, GB;<br>Class E17, AN 92-394427<br>& JP-A-4 293 519 (NISSAN MOTOR CO LTD) 19 October 1992<br>* abstract * | 4 | TECHNICAL FIELDS SEARCHED (Int.Cl.6)<br><br>B01D |
| Y | EP-A-0 424 966 (TOYOTA JIDOSHA KK) 2 May 1991<br><br>* page 4, line 8 - page 5, line 41; figure 1 * | 1-5, 9-12, 17-19, 21,22 | |
| Y | DE-A-40 39 952 (BLÜCHER ET AL.)<br><br>* the whole document * | 1-5, 8-12, 17-19, 21,22 | |

-/--

The present search report has been drawn up for all claims

| Place of search | Date of completion of the search | Examiner |
|---|---|---|
| THE HAGUE | 1 December 1994 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 485 179 (NGK INSULATORS LTD.)<br><br>* page 5, line 3 - page 7, line 21; claims 1-26; figures 1,2; example 1 *<br>--- | 1-3,5, 7-9,13, 18-22 | |
| A | DE-A-41 06 588 (SCHATZ) 3 September 1992<br>* column 4, line 18 - line 62; figure 2 *<br>----- | 1,9-16 | |

TECHNICAL FIELDS SEARCHED (Int.Cl.6)

The present search report has been drawn up for all claims

| Place of search | Date of completion of the search | Examiner |
|---|---|---|
| THE HAGUE | 1 December 1994 | Eijkenboom, A |

EPO FORM 1503 03.82 (P04C01)